Europäisches Patentamt

European Patent Office

Office européen des brevets

(19)

(11) Numéro de publication: **0 145 525**
**B1**

(12) # FASCICULE DE BREVET EUROPÉEN

(45) Date de publication du fascicule du brevet:
24.02.88

(51) Int. Cl.⁴: **B 65 G 47/88**

(21) Numéro de dépôt: **84402024.8**

(22) Date de dépôt: **09.10.84**

(54) Perfectionnements aux installations de manutention de charges.

(30) Priorité: **03.11.83 FR 8317458**

(43) Date de publication de la demande:
**19.06.85 Bulletin 85/25**

(45) Mention de la délivrance du brevet:
**24.02.88 Bulletin 88/8**

(84) Etats contractants désignés:
**AT BE CH DE FR GB IT LI LU NL SE**

(56) Documents cité:
**DE-A-1 925 556**
**FR-A-2 205 150**
**FR-A-2 335 929**
**US-A-3 710 687**
**US-A-4 218 956**

(73) Titulaire: **Allinquant, Fernand Michel, 10712
Barnwood Lane, Potomac Maryland 20854 (US)**

(72) Inventeur: **Allinquant, Fernand Michel, 10712
Barnwood Lane, Potomac Maryland 20854 (US)**

(74) Mandataire: **de Boisse, Louis, CABINET DE
BOISSE 37, Avenue Franklin D. Roosevelt,
F-75008 Paris (FR)**

EP 0 145 525 B1

## Description

La présente invention concerne des perfectiomements apportés aux installations usuelles de manutention servant au transport automatique de charges, notamment aux convoyeurs à rouleaux, pour le transfert d'un point à un autre d'un local de palettes, casiers ou autres éléments porteurs de charges.

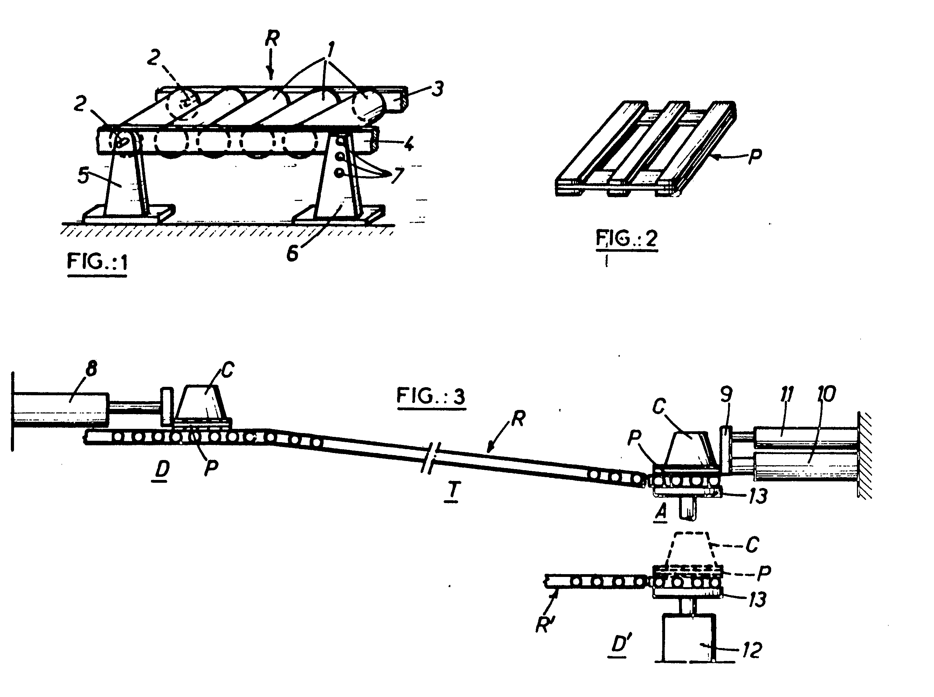

Pour fixer les idées, on a représenté schématiquement sur les figures 1 et 2 des dessins amexés: respectivement un convoyeur à rouleaux et une palette, l'un et l'autre de type courant.

On voit sur la figure 1 une sorte de tapis métallique fait d'une succession de cylindres ou rouleaux 1 libres en rotation autour de leur axe 2-2 et maintenus à proximité quasi-tangentielle les une des autres entre deux flasques longitudinaux parallèles 3, 4 recevant les axes des rouleaux et eux-mêmes supportés par des montants 5, 6. Ces derniers ou du moins certains d'entre eux présentent des orifices 7 étagés à des hauteurs différentes pour recevoir un axe de rouleau afin de permettre un réglage à l'horizontale ou à une inclinaison plus ou moins forte du chemin de roulement R que constitue l'ensemble des rouleaux 1 pour une palette P telle que celle illustrée sur la figure 2.

Dans le cas d'un chemin de roulement R horizontal, la palette P porteuse d'une charge est propulsée sous l'action d'une force initiale d'impulsion éventuellement réitérée de loin en loin pour tenir compte des frottements. Dans le cas d'un chemin de roulement R incliné vers le bas d'amont en aval, la dénivellation entre ses extrémités pourrait suffire à assurer la translation par gravité de la palette P, mais si cela ne suffisait pas, on pourrait ici également avoir recours à des impulsions propulsives.

On a représenté sur la figure 3 des dessins amexés une installation de ce genre. A la station de départ D où le chemin de roulement R présente un segment horizontal, un vérin 8 - qui peut être commandé par un ordinateur ou un codeur à des instants déterminés - applique une impulsion initiale à la charge C portée par sa palette P; celle-ci ainsi mise en mouvement poursuit son trajet sur le tronçon incliné de transfert T du chemin de roulement pour aboutir à la station d'arrivée A où la palette P vient buter contre une plaque d'arrêt 9 avant d'être enlevée ou transférée à la station de départ D' d'un autre chemin de roulement R', comme illustré schématiquement au bas de la figure 3.

L'arrêt à la station d'arrivée A de la palette P et de sa charge C qui est plus ou moins fragile et qui peut être de forme et de poids variés, doit se faire avec précaution pour assurer, dans les meilleures conditions, a sécurité du chargement et son emplacement correct.

On connaît, per US-A-4 218 956, un dispositif selon le préambule de la revendication 1 destiné à arrêter et amener dans une position fixe des objets ayant des énergies cinétiques différentes.

Le fait qu'ils sont amenés dans une position fixe est de nature à faciliter la prise ultérieure automatique des objets arrêtés et/ou leur transfert à un autre endroit. Cependant, dans ce document, rien n'est prévu pour la commande automatique d'un dispositif d'évacuation dès que la charge est arrêtée.

L'opération d'arrêt, avec un dispositif conforme à ce document, comprend deux parties: dans la première, un butoir ou un organe de prise se déplace à une vitesse à peu près égale à celle de l'objet, puis ralentie. Dans la seconde partie de l'opération, l'objet est amené à la position d'arrêt fixée à l'avance. Cette seconde partie commence quand l'objet est arrivé à une position qui est à une distance fixe de la position d'arrêt. Cette position est proche de la position d'arrêt. Dans cette seconde partie, il y a, apparemment, "retour" des signaux de position de l'objet vers l'ordinateur de commande car il est dit, colonne 5, lignes 33-38, que ce retour est coupé quand on passe à la marche à vitesse contrôlée.

Le dispositif du document qu'on vient de citer est un appareil très perfectionné, et nécessairement fragile, compliqué et coûteux. Cependant, outre le fait qu'il ne contient pas de moyens pour la commande automatique d'un dispositif d'évacuation, on constate qu'il ne permet pas d'éviter des oscillations pendant la seconde étape de l'opération d'arrêt.

Le but de la présente invention est de fournir un dispositif simple et peu coûteux, d'une grande robustesse, qui puisse être inséré dans une installation de manutention sans qu'on ait à fournir par ailleurs des moyens de commande du moyen d'évacuation de la charge, et qui ne soumette pas la charge à des oscillations au cours de l'opération d'arrêt.

Ces buts sont atteints, selon l'invention, en prévoyant que:
- l'ensemble piston-cylindre de l'amortisseur de choc constitue un ressort à gaz,
- le ressort à gaz de l'amortisseur de choc est apte à procurer par lui-même l'arrêt progressif de la charge,
- le détecteur de position comprend un ressort à gaz distinct de celui de l'amortisseur de choc,
- ledit signal du détecteur de position commande la mise en action du moyen d'évacuation de la charge.

Pour la réalisation de la présente invention, il peut être avantageusement fait appel:
- pour l'amortisseur de choc 10, à un appareil à ressort pneumatique amorti par un écoulement hydraulique, tel que celui décrit dans le brevet français FR-A-2 205 150,
- pour le détecteur de position 11, à un appareil à ressort pneumatique et à contacteur électrique de fin de course, tel que celui décrit dans le brevet fraçis FR-A-2 335 929.

L'amortisseur de choc 10 et le ressort pneumatique à contact électrique 11 sont montés parallèlement l'un à l'autre et ont des courses compatibles. Si une charge ou une succession de charges arrivent à une certaine vitesse sur l'amortisseur de choc 10, celui-ci freine progressivement le déplacement jusqu' à son arrêt total (avec ou sans oscillations, selon le réglage de l'amortisseur et l'accélération des charges en mouvement) en même temps que le ressort pneumatique à contact électrique 11 détecte la position exacte obtenue. Le détecteur de position 11 émet alors un sigal de placement correct de la charge sur la station d'arrivée A.

Ce signal peut commander un vérin 12 de changement de trajectoire: ainsi, par exemple, en se rétractant, le vérin 12 peut entraîner un élément mobile 13 du convoyeur R sur lequel reposent la palette P et sa charge C pour les amener au droit d'un autre convoyeur R'.

En définitive, grâce à l'amortisseur de choc 10 et au ressort pneumatique à contacteur électrique 11, on obtient à la fois une sécurité pour la sauvegarde des charges transportées et la possibilité de transmettre des indications de position.

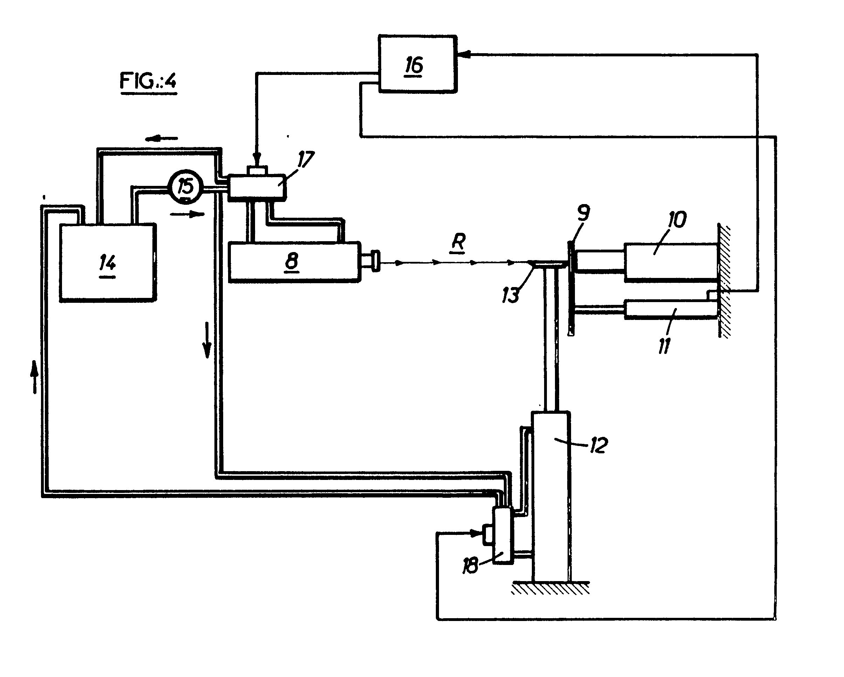

On a représenté sur la figure 4 un schéma de fonctionnement possible de l'installation qui vient d'être décrite, ce schéma mettant en oeuvre un fluide hydraulique contenu dans une bâche ou réservoir 14 et refoulé par une pompe 15 sous une pression convenable.

Au moment voulu, un codeur ou un ordinateur 16 commande une électro-vanne 17 qui commande à son tour un vérin 8 délivrant à la charge l'impulsion de démarrage qui l'envoie sur le convoyeur R. A la réception en position correcte de la charge en bout de ce dernier, le détecteur 11 transmet cette indication au codeur 16, lequel trasmet alors un ordre à l'électro-vanne 18 de commande du vérin d'aiguillage 12.

## Revendications

1. Installation de manutention commandée par ordinateur ou codeur et destinée à transporter des charges (C), de forme et de poids variés sans leur faire subir de chocs susceptibles de les détériorer tout en assurant leur placement correct, comportant une station de départ (D) où s'effectue le démarrage d'une charge, une station d'arrivée (A) équipée d'une plaque de butée (9) montée sur la tige d'un piston d'un ensemble piston-cylindre qui fait partie d'un amortisseur de choc (10) apte à procurer un arrêt progressif de la charge, ce vérin étant associé à un détecteur de position (11) apte à émettre un signal lorsque la charge atteint un placement correct pour son évacuation ultérieure, un moyen de transport (R) tel qu'un convoyeur à rouleaux disposé entre la station de départ et la station d'arrivée, et un moyen (12) d'évacuation de la charge hors de la station d'arrivée, caractérisée en ce que:
- l'ensemble piston-cylindre de l'armortisseur de choc constitue (10) un ressort à gaz,
- le ressort à gaz de l'amortisseur de choc (10) est apte à procurer par lui-même l'arrêt progressif de la charge,
- le détecteur de position (11) comprend un ressort à gaz distinct de celui de l'amortisseur de choc (10),
- ledit signal du détecteur de position (11) commande la mise en action du moyen (12) d'évacuation de la charge.

2. Installation selon la revendication 7, caractérisée en ce que l'amortisseur de choc (10) est un appareil à ressort à gaz amorti par un écoulement hydraulique.

3. Installation selon la revendication 1 ou 2, caractérisée en ce que le détecteur de position (11) est constitué par un ressort à gaz à détecteur de fin de course.

## Patentansprüche

1. Transportvorrichtung, die von einem Datenverarbeitungs-oder Codiergerät gesteuert wird und dazu dient, Gegenstände (C) unterschiedlicher Form und unterschiedlichen Gewichtes zu transportieren, ohne sie Stößen auszusetzen, die sie beschädigen könnten, wobei ihre korrekte Lage aufrechterhalten bleibt, mit einer Abfahrtsstation (D), wo der Transportbeginn eines Gegenstandes erfolgt, einer Ankunftsstation (A), die mit einer Anschlagplatte (9) versehen ist, welche an der Stange eines Kolbens einer Kolben-Zylinder-Vorrichtung angebracht ist, die Teil eines Stoßdämpfers (10) bildet, der in der Lage ist, den Gegenstand fortschreitend anzuhalten, wobei diese Vorrichtung einem Lagedetektor (11) zugeordnet ist, der ein Signal abgibt, wenn der Gegenstand eine korrekte Lage für seinen letztendlichen Abzug erreicht, einem Transportmittel (R) wie einem Rollenförderer, der zwischen der Abfahrtsstation und der Ankunftsstation angeordnet ist, und einer Einrichtung (12) zum Abziehen des Gegenstandes aus der Ankunftsstation, dadurch gekennzeichnet, daß:
- die Kolben-Zylinder-Vorrichtung des Stoßdämpfers (10) eine Gasfeder bildet,
- die Gasfeder des Stoßdämpfers (10) in der Lage ist, aus sich heraus das fortschreitende Anhalten des Gegenstandes zu bewirken,
- der Lagedetektor (11) eine Gasfeder aufweist, die verschieden ist von der des Stoßdämpfers (10),
- das Signal des Lagedetektors (11) die Betätigung der Einrichtung (12) zum Abziehen des Gegenstandes steuert.

2. Vorrichtung nach Anspruch 1, dadurch gekennzeichnet, daß der Stoßdämpfer (10) eine Vorrichtung mit einer Gasfeder ist, die durch eine hydraulische Strömung gedämpft wird.

3. Vorrichtung nach Anspruch 1 oder 2, dadurch gekennzeichnet, daß der Lagedetektor (11) von einer Gasfeder mit einem Bewegungsenddetektor gebildet wird.

## Claims

1. Computer or coder-controlled handling installation designed for the transfer of loads of variable sizes and weights, without causing to them shocks which could damage them, but ensuring their correct placement, comprising a departure station (D) at which a load sets off, an arrival station (A) provided with a stop plate (9) mounted on the rod of the piston of a piston-cylinder assembly which is part of a buffer assembly (10) adapted to provide a progressive stopping of the load, this piston-cylinder assembly being associated to a position sensor (11) adapted to emit a signal when the load reaches a correct placement for its subsequent disposal, a transport means (R) such as a roller conveyor, placed between the departure station and the arrival station, and a means (12) for the disposal of the load out of the arrival station,
characterized in that:
- the piston-cylinder assembly of the shock-absorber (10) forms a gas-spring,
- the gas-spring of the shock-absorber is adapted to provide by itself the progressive stopping of the load,
- the position sensor (11) comprises a gas-spring which is distinct from that of the shock-absorber (10),
- the said position sensor (11) controls the operation of the means (12) for the disposal of the load.

2. Installation according to claim 1, characterized in that the shock absorber (10) is a device comprising a gas-spring damped by means of a hydraulic flow.

3. Installation according to claim 1 or 2, characterized in that the position sensor (11) consists of a gas-spring with an end-stroke sensor.

R

2 2 1 3

2 4

5 7

6

**FIG.:1**

P

**FIG.:2**

8 C

**FIG.:3**

9 11 10

R

C

D P P

T 13

A

C

P

13

R'

D' 12

0 145 525

FIG.4